# EUROPEAN PATENT SPECIFICATION

(11) **EP 0 669 947 B1**
(45) Date of publication and mention of the grant of the patent: **25.09.1996**
(21) Application number: 93925091.6
(22) Date of filing: 27.10.1993
(51) Int. Cl.: C08F 279/02, C08F 279/04

(54) **RESIN WITH IMPROVED THERMOFORMING AND ENVIRONMENTAL STRESS CRACK RESISTANCE CHARACTERISTICS**
HARZE MIT VERBESSERTER WÄRMEFORMBARKEIT UND SPANNUNGSRISSBESTÄNDIGKEIT
RESINE AUX CARACTERISTIQUES AMELIOREES DE THERMOFORMAGE ET DE RESISTANCE AUX FISSURES DUES AUX CONTRAINTES DE L'ENVIRONNEMENT

(30) Priority: 20.11.1992 US 979734
(43) Date of publication of application: 06.09.1995
(73) Proprietor: THE DOW CHEMICAL COMPANY, Midland, Michigan 48640 (US)
(72) Inventor: DEMIRÖRS, Mehmet, NL-4535 CA Terneuzen (NL); BRANDS, Gerrit, J., B., NL-4535 BX Terneuzen (NL); D'HOOGHE, Edward, L., J., NL-4561 HG Hulst (NL); VAN NUFFEL, Claude, B-9041 Oostakker (BE)
(74) Representative: Raynor, John
(86) International application number: US9310326
(87) International publication number: WO9412551

(56) References cited:
- EP-A- 0 254 706
- WO-A-80/02144
- WO-A-85/02192
- WO-A-86/03211

## Description

This invention relates to rubber-reinforced monovinylidene aromatic polymers.

High impact polystyrene (usually abbreviated as HIPS) is widely used to form articles such as refrigerator interior liners and disposable food containers, such as margarine tubs. High impact polystyrene is favored for these applications in view of its combination of low cost and good toughness. A disadvantage associated with the use of HIPS in these applications is the susceptibility of the polymer to the hostile environment presented by some foods and, in the case of refrigerator liners, certain blowing agents. For example, margarine may not normally have a negative effect on HIPS. However, shaped articles formed from HIPS frequently contain residual strain resulting from the stresses of the forming process. The existence of such strain frequently makes formed plastic articles subject to attack by substances, such as margarine, which are benign towards the unstrained plastic. This phenomenon is known as environmental stress cracking and shows up as unsightly crazing and may lead to eventual failure of the formed article.

In the case of refrigerator liners, sources of environmental stress cracking include fats and oils in foods which may be spilled in the refrigerator, and organic blowing agents such as fluorinated and chlorinated hydrocarbon blowing agents which are present in the polyurethane foam used to fill the cavity behind the liner. Susceptibility to environmental stress cracking restricts the use of HIPS in this application. To avoid stress cracking, it is necessary to protect the HIPS against attack by the aggressive medium either by resorting to expensive technical measures, for example, by inserting intermediate protective layers when filling the cavity behind refrigerator liners with foam, or by resorting to the use of more expensive materials, such as ABS.

Refrigerator liners are commonly manufactured industrially using extruded sheets of HIPS. The sheets are thermoformed into the desired shape and size by first heating them to bring the polymer above its glass transition temperature. The softened polymer is then pressed into a predetermined shape of a door or inner liner. High impact polystyrene is a relatively poor heat conductor. Therefore, long heating times are required to bring the polymer to a temperature above its glass transition point.

The final, pressed, liner must have a certain thickness to maintain its structural integrity. The blank sheet of polymer is thicker than this minimum thickness in view of the fact that the pressing operation stretches the blank sheet and reduces its thickness, especially in formed corners. The degree of stretching is expressed as the "draw down ratio." In areas such as corners, a minimum wall thickness of one millimeter is commonly needed. In these areas, where high levels of draw down ratio and high levels of built--in stress are encountered, any uneven wall thickness distribution is highly undesirable. Normally, however, an inner liner will have a wall thickness distribution ranging from the one millimeter minimum up to the starting thickness of the blank sheet. Since the material is able to perform well at the minimum thickness, the excess polymer present in the thicker sections has no functional value. If it were possible to reduce the sheet thickness prior to thermoforming and still obtain a thermoformed item meeting the minimum thickness requirements, then several substantial benefits would be obtained. For example, a thinner blank sheet could be used to safely make the same liner resulting in the use of less material and, therefore, a lower manufacturing cost. Additionally, thinner blank sheets would require less heating time, reducing the manufacturing cycle time and improving the consistency of the formed product via having a more even temperature distribution in thinner blank sheets, thus further reducing manufacturing cost.

In view of the foregoing and the deficiencies of the compositions of the prior art, it would be desirable to have a high impact polystyrene having good ESCR and physical properties, and which would enable the use of thinner sheets in the manufacture of refrigerator liners and other articles.

The composition of the present invention is such a high impact polystyrene having good ESCR properties and is an improved resin for thermoforming applications. The polymer composition comprises a high impact styrenic resin containing dispersed particles of a rubber which has a second order transition temperature of 0°C or less, said dispersed rubber particles having a volume average rubber particle size of at least about 4 µm, a matrix polymer Mw/Mn ratio of less than 2.5, and a melt strength of at least 4.5 g as measured pursuant to ASTM D-1238 at 200°C and 30 rpm using a 5 kg load and containing not more than 1 weight percent of a liquid plasticizer. The resin of the present invention provides surprisingly improved thermoforming characteristics and good ESCR properties.

The rubber-reinforced polymers of the present invention are derived from one or more monovinyl aromatic compounds. Representative monovinyl aromatic compounds include styrene; alkyl substituted styrenes such as alpha-alkyl-styrenes (for example, alpha methylstyrene and alpha-ethyl-styrene) and ring alkylated styrenes and isomers thereof (for example, ortho ethyl styrene, 2,4-dimethyl styrene and vinyltoluene, particularly, ortho or para vinyl toluene); ring substituted halo-styrenes such as chloro-styrene, and 2,4-dichloro-styrene; and styrenes substituted with both a halo and alkyl group such as 2-chloro-4-methylstyrene; and vinyl anthracene. In general, the preferred monovinyl aromatic monomers are styrene, alpha-methylstyrene, one or more of the vinyl toluene isomers, and/or mixture of two or more of these, with styrene being the most preferred monovinyl aromatic compound.

The monomer may optionally comprise minor amounts of one or more additional comonomers, preferably in an amount less than 10 percent by weight of the polymerizable monomer mixture. Suitable comonomers are unsaturated nitriles, for example acrylonitrile; alkyl acrylates and alkyl methacrylates, for example methyl methacrylate or n-butylacrylate; ethylenically unsaturated carboxylic acid monomers; and ethylenically unsaturated carboxylic acid derivative monomers including anhydrides and imides such as maleic anhydride and N-phenyl maleimide.

The rubbers preferably employed in the practice of the present invention are those polymers and copolymers which exhibit a second order transition temperature which is not higher than 0°C, preferably not higher than -20°C, and more preferably not higher than -40°C as determined or approximated using conventional techniques, for example, ASTM test method D-746-52 T. Preferred rubbers contain residual unsaturation. Highly preferred rubbers are alkadiene polymers. Suitable alkadienes include 1,3-conjugated dienes such as butadiene, isoprene, chloroprene and piperylene. Most preferred are homopolymers (excepting any coupling monomers) prepared from 1,3-conjugated dienes, with homopolymers of 1,3-butadiene being especially preferred. Alkadiene copolymer rubbers containing small amounts, for example less than 15, preferably less than 10 weight percent, of other monomers such as monovinyl aromatics can also be employed if the rubbers meet the other qualifications described herein. The most preferred rubbers are the homopolymers of 1,3-butadiene which have a cis content of from 35 to 70 percent and a molecular weight, Mw, of from 200,000 to 600,000. As used herein, the weight average molecular weight, or Mw, and the number average molecular weight, or Mn, for the rubber components are determined by the gel permeation chromatographic techniques described by ASTM test method D-3536 (polystyrene standard) and expressed without correction for the differences between rubber and polystyrene standards.

The rubber particles of the HIPS compositions of the invention advantageously have a volume average particle size of at least about 4 µm. Preferably, the particle size is from 4 to 10 µm, and more preferably it is from 5 to 8 µm. As used herein, the particle size is the diameter of the rubber particles as measured in the resultant product, including all occlusions of matrix polymer within rubber particles, which occlusions are generally present in the dispersed rubber particles of a rubber-reinforced polymer prepared using mass polymerization techniques. Rubber particle morphologies, sizes and distributions may be determined using conventional techniques such as (for larger particles) using a Coulter Counter™ (Coulter Counter is a trademark of Coulter Electronic Limited, Luton, England) or, particularly for smaller particles, transmission electron microscopy.

To prepare a rubber-reinforced resin using mass or mass/suspension polymerization techniques, the solution viscosity of the rubber, as measured as a 5 weight percent solution in styrene, preferably will be greater than or equal to 90, more preferably greater than or equal to 120, most preferably greater than or equal to 160, centipoise (cps) at 25°C when the viscosity is measured using a Canon-Fenske capillary viscometer (Capillary No. 400, 1.92 mm inside diameter).

Although the rubber may contain a small amount of a crosslinking agent, excessive crosslinking can result in loss of the rubbery characteristics and/or render the rubber insoluble in the monomer.

The rubber is advantageously employed in amounts such that the rubber-reinforced polymer product contains from 2 to 20 percent, preferably from 3 to 17 percent, and more preferably from 3 to 15 weight percent rubber or rubber equivalent. The term "rubber" or "rubber equivalent" as used herein to indicate weight amounts of rubber material is intended to mean, for a rubber homopolymer (such as polybutadiene), simply the amount of rubber, and for a block copolymer, the amount of the copolymer made up from monomer(s) which, when homopolymerized form a rubbery polymer. For example, for calculating the amount of rubber in a composition where a butadiene-styrene block copolymer rubber has been employed, the "rubber" or "rubber equivalent" of the composition is calculated based on only the butadiene component in the block copolymer.

The melt strength of the polymeric composition of the invention advantageously is at least 4.5, preferably is at least 5, and more preferably is at least 5.5 grams as measured according to the method described hereinafter under the heading "Melt Strength Measurements" at 200°C and 30 rpm with a 5 kg load.

For the purposes of the present invention, the term "liquid plasticizers" refers to materials which are in the liquid state at room temperature and pressure, and which plasticize the polymeric composition of the invention. Examples of liquid plasticizers include esters, such as dioctyl phthalate and butyl stearate, and oils such as mineral oil. Preferably, the composition of the invention contains not more than about 1 percent by weight of liquid plasticizer. More preferably, the composition of the invention contains less than about 0.5 weight percent of volatile components. Most preferably, the composition of the invention is free of added liquid plasticizer.

The matrix polymer of the composition of the present invention has a relatively narrow molecular weight distribution. This is represented by the ratio of weight average molecular weight of the matrix polymer to the number average molecular weight of the matrix polymer. This ratio is represented as Mw/Mn. Advantageously, the matrix polymer employed in the present invention has an Mw/Mn ratio of less than 2.5, and preferably less than 2.3. The Mw of the matrix polymer advantageously is at least 165,000, preferably is at least 185,000, and more preferably is at least 200,000. Preferably, the Mw of the matrix polymer is less than 300,000.

In the preparation of the rubber-reinforced polymers, a reaction mixture is prepared by dissolving the rubber in the monomer(s) and the resulting monomer/rubber solution, referred to herein as the reaction mixture, is supplied to a reactor means and subsequently polymerized. The amount of rubber initially dissolved in the reaction mixture is dependent on the desired concentration of rubber in the final rubber-reinforced polymer product, the degree of conversion during polymerization and tne viscosity of the reaction mixture solution. Specifically, the viscosity of the reaction mixture solution is advantageously less than 3000 centipoise. At higher viscosities, the reaction mixture solution is difficult to process. Provided the viscosity of the reaction mixture is not undesirably high, the reaction mixture solution will generally comprise from 5 to 15 weight percent of the rubber, said weight percent being based on the total amounts of rubber and monomers employed.

Optionally, the reaction mixture will contain an organic liquid diluent. Organic liquid diluents suitably employed are normally liquid organic materials which do not boil at the polymerization conditions employed and which form a solution with the polymerizable monomer(s) and the polymer prepared therefrom. Representative organic liquid diluents include aromatic (and inertly substituted aromatic) hydrocarbons such as toluene, benzene, ethylbenzene and xylene; optionally inertly substituted, saturated aliphatic hydrocarbons having either straight- or branched-chains of five or more carbon atoms such as heptane, hexane and octane; and optionally inertly substituted, alicyclic hydrocarbons having five or six carbon atoms such as cyclohexane. Preferred of such organic liquid diluents are the inertly substituted aromatics, with ethylbenzene and xylene being most preferred. In general, the organic liquid diluent is employed in amounts sufficient to improve the processability and heat transfer during polymerization, for example, flow characteristics of the polymerization mixture. Such amounts will vary depending on the rubber, monomer and diluent employed, the process equipment and the desired degree of polymerization. In general, if employed, the reaction mixture will normally contain from 2 to 30 weight percent of the diluent based on the total weight of the rubber, monomer and diluent.

During the polymerization of the resulting reaction mixture, the polymerization conditions are maintained such that phase inversion subsequently occurs. Under such conditions the monomer is polymerized both and separately (free polymer or matrix polymer) with the rubber (grafted), which dissolved rubber thereby becomes grafted with a portion of polymerized monomer. The balance of free polymer, basically incompatible with the rubber, forms a discontinuous smaller volume polymer/monomer phase dispersed throughout the larger volume continuous phase of the monomer/rubber (including grafted rubber) solution.

Eventually, at a point after sufficient amounts of free polymer are formed, the free polymer converts from a discontinuous phase dispersed in the continuous phase of the unpolymerized monomer(s), through a point where there is no distinct continuous or discontinuous phases in the polymerization mixture, to a continuous polymer phase having the rubber dispersed as discrete particles throughout. As the polymer/monomer phase becomes the larger volume phase and hence the continuous phase, the grafted rubber forms a discontinuous phase. This is the point in the polymerization when phase inversion occurs and the rubber becomes dispersed in the form of particles through the continuous polymer phase resulting in a product having rubber particles dispersed in a matrix of monovinylidene aromatic polymer.

Preferably, at phase inversion, the rubber is sufficiently grafted such that the dispersed rubber particles, following initial sizing, are capable of retaining essentially the same average particle size and morphological properties throughout the remainder of the polymerization process. Phase inversion has usually taken place at a point in the polymerization process where the reaction mixture contains a solids level which, in weight percent based on reaction mixture, is about 2.5 or 3 times the weight content of the added rubber material. Therefore, a relatively high agitation level is preferably maintained until a point in the polymerization process where the reaction mixture contains a solids level which, in weight percent based on reaction mixture, is at least 3, preferably 4 times the weight content of the added rubber material. For example, when there is 5 to 10 weight percent rubber added to the reaction mixture, relatively high agitation is maintained until the reaction mixture contains about 30 percent by weight solids. As used herein, the term solids refers to the polymeric components of the reaction mixture such as the rubber which was added initially and the monovinylidene aromatic polymer which has been formed.

In general, continuous methods are employed for mass polymerizing the monovinyl aromatic compound in the reaction mixture. In the practice of the present invention it is generally preferred to utilize a stratified, linear flow, stirred tower type reactor, also referred to as a plug flow type reactor. Such reactors are well known. See, for example U.S. Patent 2,727,884. Such a process may or may not comprise recirculation of a portion of the partially polymerized product. The temperatures at which polymerization is most advantageously conducted are dependent on the specific components, particularly initiator, employed but will generally vary from 60°C to 190°C.

A suitable graft promoting initiator may be employed in the preparation of the rubber-reinforced polymer. Examples of such initiators include the peroxide initiators such as the peresters, for example, tertiary butyl peroxybenzoate, tertiary butyl peroxyacetate, dibenzoyl peroxide, and dilauroyl peroxide, the perketals, for example,1,1'-bis(tertiary butyl peroxy) cyclohexane, 1,1-bis tertiary butyl peroxy-3,3,5-trimethyl cyclohexane, and dicumyl peroxide, and the percarbonates and photochemical initiation techniques. Preferred initiators include tertiary butyl peroxy benzoate, 1,1-bis tertiary butyl peroxy cyclohexane, 1,1-bis tertiary butyl peroxy-3,3,5-trimethyl cyclohexane and tertiary butyl peroxy acetate. Initiators may be employed in a range of concentrations dependent on a variety of factors including the specific initiator employed, the desired levels of polymer grafting and the conditions at which the mass polymerization is conducted. Specifically, in the preferred mass polymerization process for preparing rubber-reinforced polymers, from 50 to 2000, preferably from 100 to 1500, weight parts of the initiator are employed per million weight parts of monomer.

The polymerization mixture may also contain other additive materials and/or polymerization aids such as plasticizers or lubricants such as mineral oil, butyl stearate or dioctyl phthalate; stabilizers including antioxidants (for example, alkylated phenols such as di-tert-butyl-p-cresol or phosphites such as trisnonyl phenyl phosphite); chain transfer agents, such as an alkyl mercaptan, such as n-dodecyl mercaptan; or mold release agents, for example, zinc stearate; all of which additives and/or polymerization aids are added to the reaction mixture where appropriate including before, during or after polymerization.

The use of a chain transfer agent is optional and is usually employed only in the production of a composition or prepolymer containing larger size rubber particles (for example, having an average particle size of at least one micrometer). If employed, the chain transfer agent is generally employed in an amount of from 0.001 to 0.5 weight percent based on the total weight of the polymerization mixture to which it is added.

Crosslinking of the rubber in the resulting product and removal of the unreacted monomers, as well as any reaction diluent, if employed, and other volatile materials is advantageously conducted employing conventional techniques.

The compositions of the invention can be readily formed into useful articles via methods well known to those skilled in the art. For example, extruded sheets and films are readily prepared from the compositions of the invention.

The following experiments are set forth to illustrate the present invention. All parts and percentages are by weight unless otherwise indicated. The abbreviations used in the tables include Mw (weight average molecular weight), Mn (number average molecular weight) and Mw/Mn Ratio (ratio of Mw to Mn of the matrix polymer).

### Example 1

To a series of three plug flow reactors equipped with means for agitation and temperature control is fed a mixture with the following composition: ethyl benzene, 4.0 percent; rubber (Diene 55), 7.2 percent; with the balance being styrene. Additionally, a free radical initiator 1,1'-bis (tertiary butyl peroxy) cyclohexane is added to the feed in an amount of 200 ppm based on the total feed composition, and 120 ppm of n-dodecyl mercaptan is added as a chain transfer agent.

The composition including-initiator and chain transfer agent is fed into the first reactor at an inlet temperature of 110°C. The tem peratu re in the series of reactors is gradually increased. The outlet temperature of the third reactor is 180°C. In order to obtain n a desired particle size the agitation is adjusted in the first reactor. The agitation levels in the remaining two reactors are sufficient to maintain a reasonable heat transfer rate. At the end of the process the solids content of the polymerizing mixture is 85 percent. The diluent and the unreacted styrene monomer are removed from the polymerization mixture by heating it to 240°C in a vacuum chamber at 9 mbar. At this stage the rubber particles are strengthened by cross-linking them. The material is then extruded into a strand and cut into pellets. All subsequent testing is done using the pelletized material. Hereinafter the product of Example 1 is referred to as HIPS 1.

### Comparative Experiment A (not an embodiment of the present invention)

The method of Example 1 is repeated except that the feed composition includes 2.0 percent mineral oil and the amount of ethyl benzene is 8 percent. The inlet temperature in the first reactor is 115°C. The product is referred to hereinafter as HIPS A.

### Comparative Experiment B (Not an embodiment of the present invention)

The method of Comparative Experiment 2 is repeated except that the inlet temperature of the first reactor is 128°C, and no peroxide initiator is used. The agitation conditions are adjusted to obtain a smaller particle size than in the previous two experiments The product is referred to hereinafter as HIPS B.

The physical properties of HIPS 1, A and B are summarized in Table 1.

**Table 1 :**

| HIPS Properties | | | |
|---|---|---|---|
| Properties | Example 1 HIPS 1 | C.E.A. HIPS A | C.E.B HIPS B |
| % Rubber Content | 8.5 | 8.5 | 8.5 |
| Molecular Weight, Weight Av. (a.m.u.) | 205000 | 185000 | 180000 |
| Molecular Weight, Number Av. (a.m.u.) | 95000 | 74000 | 72000 |
| Mw/Mn | 2.16 | 2.5 | 2.5 |
| Rubber Part. Size Volume Average (µm) | 6.0 | 6.0 | 3.2 |
| Melt Flow Rate (g/10 min) | 1.2 | 2.5 | 3.5 |
| % Mineral Oil | 0 | 2.0 | 2.0 |

Rubber content is calculated from the feed composition and the final conversion. Molecular weight values are determined using a gel permeation chromatograph calibrated by universal polystyrene samples. Volume average particle size is determined by a Coulter Counter. Melt flow rate is determined via ASTM D-1238 at 200°C using a 5 kg load.

### Environmental Stress Crack Resistance - Margarine

The objective of this test is to determine the behavior of the HIPS materials in contact with an oily substance under stress conditions. Environmental stress crack resistance is measured as follows. First, a sheet of 2 mm thickness is extruded using a Reifenhauser extruder and the sheet is thermoformed into margarine tubs. The tubs are then filled with margarine making sure all parts are in good contact with the oily margarine. Each tub is closed with a lid and a predetermined weight is placed on top of the lid of each tub in order to stress the tubs. The tubs are circular in shape and the stress is calculated at 0.044 kg/mm². As time progresses, the bottom of the tubs experience high levels of stress and may undergo stress cracking due to the influence of the margarine. The tubs are visually inspected for signs of stress whitening and crazing which, if observed, is evidence of fracture of the polymer material. The test results are given in Table 2.

**Table 2:**

| ESCR Testing Results | | |
|---|---|---|
| Time | C.E.A HIPS A | EXAMPLE 1 HIPS 1 |
| 1 week | Stress whitening deformation of tub bottom | no stress whitening |
| 2 weeks | same state as above | same state as above |
| 4 weeks | same state as above | same state as above |
| 2 months | same state as above | same state as above |
| 4 months | same state as above | same state as above |

After one week of testing the visual inspection of the tub made of HIPS A shows crazes formed at the bottom and, furthermore, the material is deformed and buckled at the bottom of the tub where the thickness is at a minimum. On the other hand the tub of HIPS 1 shows no signs of deformation after 4 months and no buckling at the bottom of the tub.

The thermoforming behavior of the materials is assessed by several mechanisms.

### Melt Strength Measurements

Melt strength measurements are made using an extrusion plastometer as described in ASTM D-1238. A heated cylinder is filled with the polymer sample at a constant temperature with one end of the cylinder restricted with a small die with an orifice. A 5 kg weight is applied to force the polymer through the orifice of the die after a predetermined heating time has elapsed. The extrudate passes vertically downward under a first pulley, then passes vertically upward over a second pulley and then passes horizontally to a wind- up drum which is rotated at 30 rpm. Each pulley is of black anodized aluminum alloy, has a nominal diameter of 1.25" measured at the center of a 120° V-groove, and is 0.114" thick. Both pulleys have a precision instrument bearing and are statically balanced. Strain on the first pulley is measured via a strain cell having a capacity of 60 grams or less. The strain cell is calibrated using analytical weights. The first pulley is mounted on a force lever which is adjustable to permit increasing the force applied to the strain cell by factors of up to 8 times the applied force. The wind-up drum is aluminum and has a diameter of 2.000" and is about 3" wide. The drum is equipped with a means for adjusting the speed over a range of from 0 to 2,000 rpm. The force at a given rate of rotation is a measure of the melt strength of the material. The results of the melt strength testing are summarized in Table 3.

**Table 3:**

| Melt Strength Data | | |
|---|---|---|
| Material | Cylinder Temp. (°C) | Melt Strength (grams) |
| HIPS 1 | 200 | 5.6 |
| HIPS 1 | 180 | 17.6 |
| HIPS A | 200 | 3.8 |
| HIPS A | 180 | 7.5 |
| HIPS B | 200 | 4.0 |
| HIPS B | 180 | 8.1 |

From Table 3 it is clear that the polymer of the invention has a higher melt strength than the polymers of the two comparative experiments. This improved melt strength indicates that HIPS 1 can be thermoformed to a higher draw down ratio.

### Extrusion Experiments

HIPS 1 and HIPS A are extruded on an industrial scale extruder in preparation for the thermoforming operation. Surprisingly, HIPS 1 can be extruded at a rate 20 percent higher than that of HIPS A despite the higher melt flow rate of HIPS A.

### Thermoforming Experiments

HIPS 1 and HIPS A are tested using state of the art industrial size thermoforming machinery, i.e, a two-station Illig type machine. In this particular application it is found that the most critical area is around the corners where minimum thickness is observed. HIPS A requires a sheet thickness of 4.8 mm prior to the thermoforming operation. If the thickness goes below that then parts of the thermoformed refrigerator liner have a thickness below 0.8 mm, which is unacceptable.

In a second series of experiments HIPS 1 is extruded at different thicknesses and it is found that a sheet of 3.8 mm starting thickness gives acceptable corner thickness above the critical minimum of 0.8 mm. This constitutes a material saving of at least 20 percent in terms of raw materials.

## Claims

1. A polymer composition comprising a high impact styrenic resin containing dispersed particles of a rubber which has a second order transition temperature of 0°C or less, said dispersed rubber particles having a volume average particle size of at least 4 µm; said resin having a matrix polymer Mw/Mn ratio of less than 2.5 and a melt strength of at least 4.5g as measured pursuant to ASTM D-1238 at 200°C and 30 rpm using a 5kg load and containing not more than 1 weight percent of liquid plasticizer.

2. A composition as claimed in Claim 1 wherein the ratio of Mw/Mn is less than 2.3.

3. A composition as claimed in Claim 1 or Claim 2 wherein the volume average rubber particle size is from 4 to 10 µm.

4. A composition as claimed in Claim 3, wherein the volume average rubber particle size is from 5 to 8 µm.

5. A composition as claimed in any one of the preceding Claims, wherein the liquid plasticizer is present and is mineral oil.

6. A composition as claimed in any one of claims 1 to 5 which contains less than 0.5 percent of liquid plasticizer.

7. A composition as claimed in any one of Claims 1 to 4 having no added liquid plasticizer.

8. The composition as claimed in any one of Claims 1 to 4 which is free of mineral oil.

9. The composition as claimed in any one of Claims 1 to 4 which contains less than 0.5 weight percent of mineral oil.

10. An article comprising a composition as claimed in any one of the preceding Claims.

11. The use of a polymer composition as claimed in any one of Claims 1 to 9 in the production of a thermoformed article.

## Patentansprüche

1. Polymerzusammensetzung, enthaltend ein styrolhaltiges Harz hoher Schlagzähigkeit, das dispergierte Kautschukteilchen, die eine Übergangstemperatur eines Phasenübergangs zweiter Ordnung von 0°C oder weniger aufweisen, enthält, wobei die dispergierten Kautschukteilchen eine über das Volumen gemittelte Teilchengröße von wenigstens 4 µm aufweisen, dieses Harz ein Mw/Mn-Verhältnis des Matrixpolymers von weniger als 2.5 und eine Schmelzfestigkeit von mindestens 4.5 g, gemessen nach ASTM D-1238, bei 200°C und 30 Umdrehungen/min unter Verwendung einer Belastung von 5 kg aufweist, und die nicht mehr als 1 Gew.-% eines flüssigen Weichmachers enthält.

2. Zusammensetzung nach Anspruch 1,
**dadurch gekennzeichnet,**
daß das Verhältnis von Mw/Mn geringer als 2,3 ist.

3. Zusammensetzung nach einem der Ansprüche 1 oder 2,
**dadurch gekennzeichnet,**
daß die über das Volumen gemittelte Teilchengröße des Kautschuks 4-10 µm beträgt.

4. Zusammensetzung nach Anspruch 3,
**dadurch gekennzeichnet,**
daß die über das Volumen gemittelte Teilchengröße des Kautschuks 5-8 µm beträgt.

5. Zusammensetzung nach einem der vorhergehenden Ansprüche,
dadurch gekennzeichnet,
daß der vorhandene flüssige Weichmacher Mineralöl ist.

6. Zusammensetzung nach einem der Ansprüche 1-5,
**dadurch gekennzeichnet,**
daß sie weniger als 0,5% des flüssigen Weichmachers enthält.

7. Zusammensetzung nach einem der Ansprüche 1-4,
**dadurch gekennzeichnet,**
daß kein zusätzlicher flüssiger Weichmacher vorhanden ist.

8. Zusammensetzung nach einem der Ansprüche 1-4,
**dadurch gekennzeichnet,**
daß sie frei von Mineralöl ist.

9. Zusammensetzung nach einem der Ansprüche 1-4,
**dadurch gekennzeichnet,**
daß sie weniger als 0,5 Gew.-% Mineralöl enthält.

10. Gegenstand, der eine Zusammensetzung nach einem der vorstehenden Ansprüche enthält.

11. Verwendung einer Polymerzusammensetzung nach einem der Ansprüche 1-9 bei der Herstellung eines wärmegeformten Gegenstandes.

## Revendications

1. Composition polymère comprenant une résine styrénique à résistance élevée au choc contenant des particules dispersées d'un caoutchouc qui possède une température de transition du deuxième ordre de 0°C ou moins, lesdites particules de caoutchouc dispersées ayant une granulométrie moyenne en volume d'au moins 4 µm; ladite résine ayant un rapport Mm/Mn du polymère de la matrice inférieur à 2,5 et une résistance à l'état fondu d'au moins 4,5 g telle que mesurée selon ASTM D-1238 à 200°C et à 30 tr/min en utilisant une charge de 5 kg et ne contenant pas plus de 1 pour-cent en poids de plastifiant liquide.

2. Composition selon la revendication 1, dans laquelle le rapport Mm/Mn est inférieur à 2,3.

3. Composition selon l'une des revendications 1 ou 2, dans laquelle la granulométrie moyenne en volume du caoutchouc est comprise entre 4 et 10 µm.

4. Composition selon la revendication 3, dans laquelle la granulométrie moyenne en volume du caoutchouc est comprise entre 5 et 8 µm.

5. Composition selon l'une des revendications précédentes, dans laquelle le plastifiant liquide est présent et est constitué d'une huile minérale.

6. Composition selon l'une des revendications 1 à 5, qui contient moins de 0,5 pour-cent de plastifiant liquide.

7. Composition selon l'une des revendications 1 à 4, n'ayant aucun plastifiant ajouté.

8. Composition selon l'une des revendications 1 à 4, qui est exempte d'huile minérale.

9. Composition selon l'une des revendications 1 à 4, qui contient moins de 0,5 pour-cent en poids d'huile minérale.

10. Article comprenant une composition selon l'une des revendications précédentes.

11. Utilisation d'une composition polymère selon l'une des revendications 1 à 9 dans la production d'un article thermoformé.
